# EUROPÄISCHE PATENTSCHRIFT

(11) **EP 0 590 743 B1**
(45) Veröffentlichungstag und Bekanntmachung des Hinweises auf die Patenterteilung: **12.06.1996**
(21) Anmeldenummer: 93250247.9
(22) Anmeldetag: 13.09.1993
(51) Int. Cl.: B65G 47/38

(54) **Kippbare Schale einer Sortierförderanlage**
Tiltable tray of a sortation conveyor installation
Plateau basculant d'une installation de transport de triage

(30) Priorität: 30.09.1992 DE 4233553
(43) Veröffentlichungstag der Anmeldung: 06.04.1994
(73) Patentinhaber: MANNESMANN Aktiengesellschaft, D-40213 Düsseldorf (DE)
(72) Erfinder: Ostholt, Rüdiger, D-58300 Wetter (DE)
(74) Vertreter: Meissner, Peter E., Dipl.-Ing.

(56) Entgegenhaltungen:
- DE-C- 3 511 936

## Beschreibung

Die Erfindung betrifft eine kippbare Schale einer Sortierförderanlage gemäß dem Oberbegriff des Patentanspruches 1.

Aus der DE 35 11 936 C2 ist eine kippbare Plattform bzw. Schale einer Sortierförderanlage bekannt. Die Sortierförderanlage besteht im wesentlichen aus einer Vielzahl von Schalen, die in Förderrichtung zumeist unmittelbar aufeinanderfolgend vorgesehen und mit einer Fördervorrichtung verbunden sind. Die Schalen sind jeweils über Tragglieder mit der Fördervorrichtung verbunden, und zwar in der Art, daß sie einerseits quer zur Förderrichtung kippbar und andererseits hierbei bezüglich des Traggliedes absenkbar sind. Zur Stabilisierung der Schalen in der horizontalen Transportstellung und zur Ausführung einer Bewegung in eine gegenüber der Transportstellung gekippten Entleerstellung sind je Schale zusätzlich zu dem Tragglied zwei Kniehebel vorgesehen. Die Kniehebel sind jeweils über Gelenke in Förderrichtung gesehen rechts und links am Fuß des Traggliedes und mit ihrem anderen Ende an der Unterseite der Schale, sowie beabstandet von der Kippachse der Schale befestigt. Zur Erzeugung eines gesteuerten Kippvorganges der Schale zum Abgeben des geförderten Stückgutes auf einen angrenzenden Abzweigförderer sind an den unteren Enden der Kniehebel Schwingen angeordnet, die über parallel zur Förderrichtung verlaufende Führungsbahnen verschwenkt werden können. Hierdurch wird eine Knickbewegung eines vorgewählten Kniehebels bewirkt, die zu einer Kippbewegung der Schale in die gewünschte Richtung führt. Die Schwingen der Kniehebel sind untereinander derart angeordnet, daß bei Betätigung einer Schwinge die andere Schwinge arretiert wird, da für die Kippbewegung nur der auf der dem Abzweigförderer zugewandten Seite angeordnete Kniehebel eingeknickt wird. Zur Erzeugung eines gesteuerten Wiederaufrichtvorganges der Schale können z.B. Rückstellrollen vorgesehen werden. Die Rückstellrollen sind in Förderrichtung hintereinander und von der Entleerstation ausgehend ansteigend angeordnet, um durch Untergreifen der sich vorbeibewegenden Schale diese aus der Entleerstellung wieder in die horizontale Transportstallung zurückzubewegen.

Diese kippbare Plattform bzw. Schale erweist sich als nachteilig, da durch die Anordnung der Schwingen an den unteren Enden der Kniehebel, die in Richtung der Fördervorrichtung hervorstehen, die Bauhöhe erhöht wird. Außerdem erweist sich die Einleitung des Absenkvorganges der Schale als zeitaufwendig, da der Kniehebel zunächst aus seiner Ruhelage heraus in Richtung seiner Strecklage bewegt werden muß, um ihn anschließend einknicken zu können. Darüber hinaus führt die Absenkung der Kippachse innerhalb des Traggliedes und die geringfügige Streckung des nicht einknickenden Kniehebels zu einer reinen Abrutschbewegung des Stückgutes von der Schale. Hierdurch wird in Bereich der Entleerstation in Förderrichtung gesehen ein relativ langer Auffangbereich für das Stückgut benötigt.

Ausgehend von diesem Stand dar Technik liegt der Erfindung die Aufgabe zugrunde, eine kippbare Schule einer Sortierförderanlage zu schaffen, die eine geringe Bauhöhe aufweist und gleichzeitig die Abwurfbewegung des Stückgutes von der Schale optimiert.

Gelöst wird diese Aufgabe durch eine kippbare Schale einer Sortierförderanlage mit den Merkmalen des Anspruches 1. Die kennzeichnenden Merkmale der Unteransprüche 2 - 14 stellen vorteilhafte Ausgestaltungen der erfindungsgemäßen kippbaren Schale einer Sortierförderanlage dar.

Erfindungsgemäß wird durch die Anordnung der zwei Kniehebel und des Traggliedes zwischen der kippbaren Schale und der Fördervorrichtung an einem Ende über Kugelgelenke und an dem anderen Ende bzgl. des Traggliedes starr und der Kniehebel über Scharniergelenke, wobei die Kugelgelenke in den Eckpunkten eines gedachten Dreieckes und die Scharniergelenke mit ihren Schwenkachsen parallel zu der durch die Kugelgelenke des gegenüberliegenden Kniehebels und des Traggliedes verlaufenden Kippachse ausgerichtet ist, erreicht, daß die Schale in der horizontalen Transportstellung und der geneigten Kippstellung spielarm geführt ist. Die hierdurch bedingte ruhige Lage der Schale in der Transportstellung bedingt eine sichere Förderung des Stückgutes. Darüber hinaus wird durch die schräg zur Förderrichtung verlaufende Kippachse, gewährleistet, daß das Stückgut sicher durch die Kippbewegung abgeworfen wird. Es erweist sich als besonders vorteilhaft, daß die im wesentlichen aus den beiden Kniehebeln und dem Tragglied bestehende Kippeinheit in verschiedenen Positionen zwischen der Schale und der Fördervorrichtung angeordnet werden kann, um hierdurch die Kippeigenschaften der Schale zu variieren. Die verschiedenen Positionen können dadurch erreicht werden, daß das Tragglied in Förderrichtung gesehen vorne oder hinten auf der Fördervorrichtung angeordnet wird und die Kugelgelenke der Kniehebel und des Traggliedes an der Schale oder an der Fördervorrichtung befestigt werden. Für das Sortieren von Stückgütern, insbesondere Gepäckstücken hat sich die Kombination der Anordnung des Traggliedes in Förderrichtung hinten auf der Fördervorrichtung und die Anordnung der Kugelgelenke an der Schale als vorteilhaft erwiesen, um ein zielgenaues Abkippen des Stückgutes zu erreichen. Die Anordnung der Kugelgelenke an der Fördervorrichtung eignet sich insbesondere für schwere Stückgüter, da durch diese Anordnung der Kippwinkel der Schale geringer ist als bei der Anordnung der Kugelgelenke an der Schale selbst, jedoch die seitliche Auslenkung der Schale größer ist, so daß ein seitliches Abgleiten des Stückgutes begünstigt wird. Die Anordnung des Traggliedes in Förderrichtung gesehen vorne auf der Fördervorrichtung zeichnet sich dadurch aus, daß hierdurch das Stückgut entgegen der Förderrichtung in den Auffangbereich eines angrenzenden Abzweigförderers abgekippt wird und somit ein Verklemmen des Stückgutes zwischen der Schale und etwaigen Seitenwänden des Auffangbereiches vermieden wird. Die symmetrische Anordnung der Anlenkpunkte der Kugelgelenke der Kniehebel zu der parallel zur Förderrichtung verlaufenden Mittellinie der Schale sowie die ebenfalls symmetrische Anordnung der Schwenkachsen der Scharniergelenke zu der Mittellinie der Grundplatte ermöglicht ein beidseitiges Abkippen des Stückgutes bei identischer Kippcharakteristik. Die spezielle Ausbildung der Kniehebel aus einem Arm, der über ein Scharniergelenk mit einem weiteren rahmenförmig ausgebildeten Arm verbunden ist, führt durch die breitere Abstützfläche des Rahmens zu einem Kniehebel, der quer zur Schwenkachse des Scharniergelenkes kippstabil ist. Die Anordnung eines Federelementes und eines Dämpferelementes zwischen der Grundplatte und der Schale sowie die Anordnung von Sperrklinken auf der Grundplatte, die die Kniehebel arretieren, ermöglicht es, die Schale unter Vorspannung des Federelementes aus der Kippstellung in die Transportstellung aufzurichten und anschließend den Kniehebel mit der Sperrklinke zu arretieren. An einer gewünschten Stelle innerhalb der Sortierförderanlage kann nun die Sperrklinke betätigt und somit der Kniehebel entriegelt werden. Hierdurch wird durch die gespeicherte Federenergie der Kniehebel eingeknickt und die Schale kippt. Das Dämpfungselement ermöglicht eine sanfte einstellbare Kippgeschwindigkeit. Als weiterhin vorteilhaft erweist sich die leicht nach innen gekippte Endstellung der Kniehebel, die bei Anordnung der Schale in der Transportstellung erreicht wird, da hierdurch bei Auslösen der Sperrklinke immer ein gerichtetes Einknicken des Kniehebels nach innen in Richtung des Traggliedes gewährleistet ist.

Im folgenden wird die Erfindung anhand eines in Figuren dargestellten Ausführungsbeispiels näher erläutert. Es zeigen:
- Figur 1: eine Seitenansicht einer Sortierförderanlage mit einer kippbaren Schale,
- Figur 2: eine Vorderansicht von Figur 1,
- Figur 3: eine Draufsicht von Figur 1 mit angrenzendem Abzweigförderer,
- Figur 4: einen vergrößerten Ausschnitt von Figur 1 aus dem Bereich der kippbaren Schale in Kippstellung,
- Figur 5: eine Draufsicht auf Figur 4 in horizontaler Transportstellung.

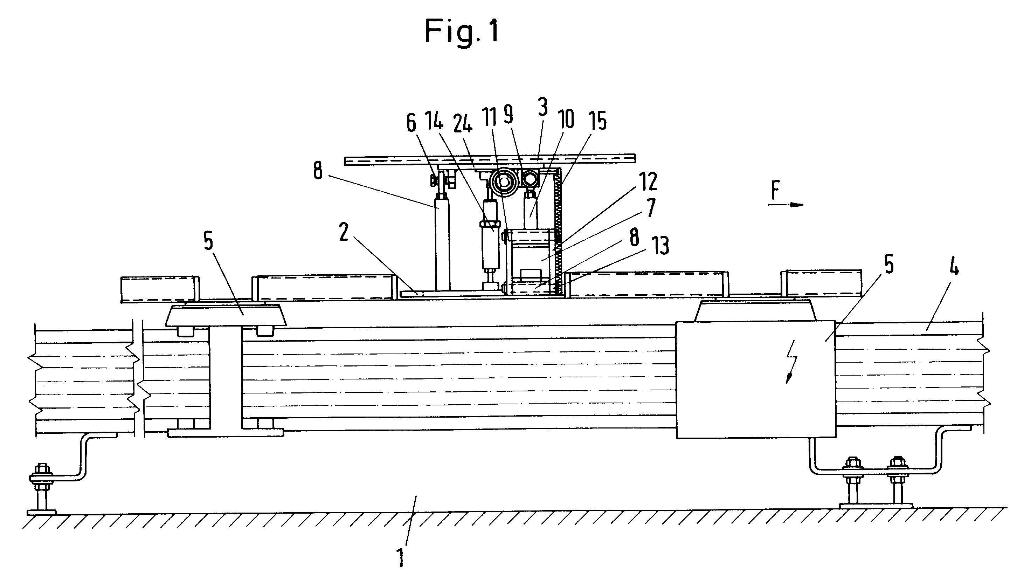

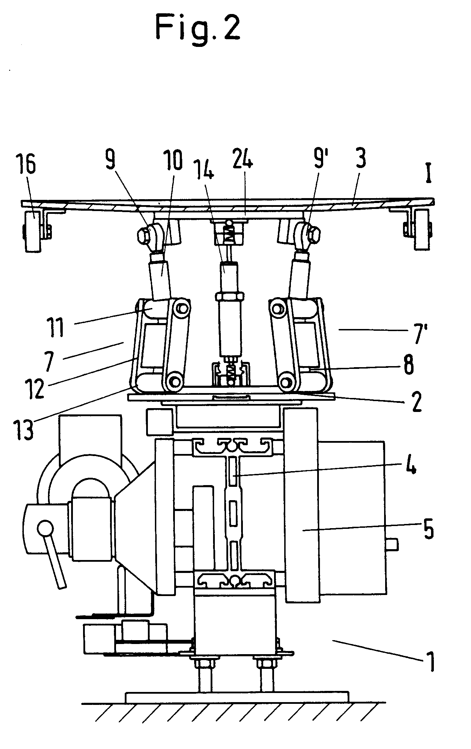

Die Figur 1 zeigt eine Seitenansicht einer Sortierförderanlage, die im wesentlichen aus einer Fördervorrichtung 1 mit einer Grundplatte 2 zur Aufnahme einer kippbaren Schale 3 besteht. Im Sinne der Erfindung fällt unter den Begriff Schale auch eine ebene Plattform sowie eine Transportfläche, die quer zur Förderrichtung F von der Mitte ausgehend beidseitig nur leicht nach oben gewölbt oder geneigt ist. Die Fördervorrichtung 1 ist hier als Einschienenbahn mit einer über Stützen bodengeführten Schiene 4 ausgebildet. Die Einschienenbahn besteht im wesentlichen aus einer Vielzahl die Schiene 4 von oben U-förmig umgreifenden Laufkatzen 5, die in Förderrichtung F gesehen hintereinander angeordnet sind und von denen mindestens eine angetrieben ist. Zwischen jeweils zwei benachbarten Laufkatzen 5 ist jeweils eine Grundplatte 2 angeordnet, die jeweils auf den Laufkatzen 5 gelenkig gelagert ist. Auf der den Laufkatzen 5 abgewandten Seite der Grundplatte 2 ist ein Tragglied 8 befestigt, das sich rechtwinklig zur Grundplatte 2 erstreckt. Das Tragglied 8 ist in Förderrichtung F gesehen in der Mitte und hinten auf der Grundplatte 2 befestigt. An dem der Grundplatte 2 abgewandten Ende des Traggliedes 8 ist ein Kugelgelenk 6 angeordnet, das über eine Zwischenplatte 24 mit der der Grundplatte 2 zugewandten Unterseite der Schale 3 verbunden ist. Die Zwischenplatte 24 dient zur Aufnahme der Schale 3 und ist parallel zu dieser angeordnet. Außerdem sind auf der Grundplatte 2 um jeweils eine parallel zur Grundplatte 2 und schräg zur Förderrichtung F ausgerichtete Schwenkachse S, S' bewegbare Kniehebel 7, 7' gelagert, deren der Grundplatte 2 abgewandten Enden ebenfalls über Kugelgelenke 9, 9' über die Zwischenplatte 24 mit der Unterseite der Schale 3 verbunden sind. Die Kniehebel 7, 7' bestehen im wesentlichen aus je einem Arm 10, 10', der einerseits mit einem Kugelgelenk 9, 9' und andererseits über ein Scharniergelenk 11, 11' mit einem weiteren Arm, der als Rahmen 12, 12' ausgebildet ist, verbunden ist. Die Rahmen 12, 12' sind jeweils über weitere Scharniergelenke 13, 13', die um die Schwenkachsen S, S' bewegbar sind an der Grundplatte 2 angelenkt. Außerdem sind das Tragglied 8 und die Kniehebel 7, 7' in Förderrichtung F gesehen hintereinander und voneinander beabstandet angeordnet. Aus Vereinfachungsgründen sind in der Figur 1 die Kniehebel 7,7' mit ihren Schwenkachsen S,S' in Förderrichtung F ausgerichtet gezeichnet. Die erfindungsgemäß beanspruchte Ausrichtung der Schwenkachsen S,S' zu den gegebenüberliegenden Kippachsen K,K' ist in den Figuren 2, 4 und 5 dargestellt.

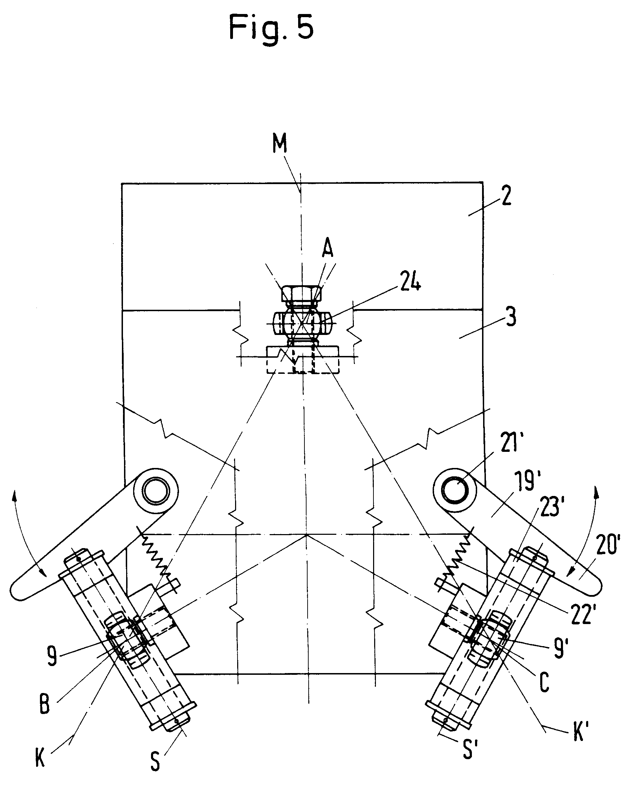

Des weiteren ist aus Figur 1 ersichtlich, daß ebenfalls in Förderrichtung F gesehen zwischen den Kniehebeln 7, 7' und hinter dem Tragglied 8 ein Dämpferelement 14 angeordnet ist, das über je ein Kugelgelenk mit den zugewandten Seiten der Schale 3 und der Grundplatte 2 verbunden ist. Ferner ist zwischen der Grundplatte 2 und der Schale 3 ein Federelement 15, das insbesondere als Zugfeder ausgebildet ist, befestigt. Das Dämpferelement 14 und das Federelement 15 sind in Förderrichtung F gesehen mit dem Tragglied 8 fluchtend und entlang der Mittellinie M (s. Fig. 5) der Grundplatte 2 bzw. der Fördervorrichtung 1 angeordnet, die parallel zur Förderrichtung F und durch die Mitte der Grundplatte 2 verläuft. Hierbei ist die Grundplatte 2 symmetrisch zur Längsachse der Schiene 4 angeordnet.

In diesem Ausführungsbeispiel ist die Sortierförderanlage mit einer kippbaren Schale 3 beschrieben, deren Tragglied 8 in Förderrichtung F gesehen hinten auf der Fördervorrichtung 1 angeordnet ist und deren Kugelgelenke 6, 9, 9' mit der Schale verbunden sind. Im Rahmen der Erfindung ist es jedoch auch möglich, mit dem Ziel die Kippeigenschaften der Schale an das Stückgut anzupassen, die im wesentlichen aus der Grundplatte 2, dem Tragglied 8, den Kniehebeln 7, 7', der Zwischenplatte 24 bestehende Baueinheit jeweils um 180^{o} in Horizontal- und/oder Vertikalrichtung gedreht auf der Fördervorrichtung 1 zu befestigen.

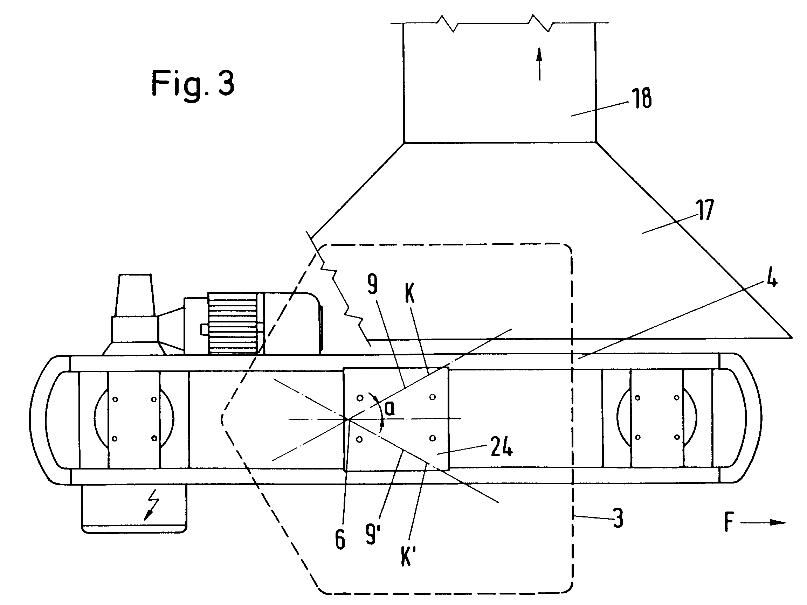

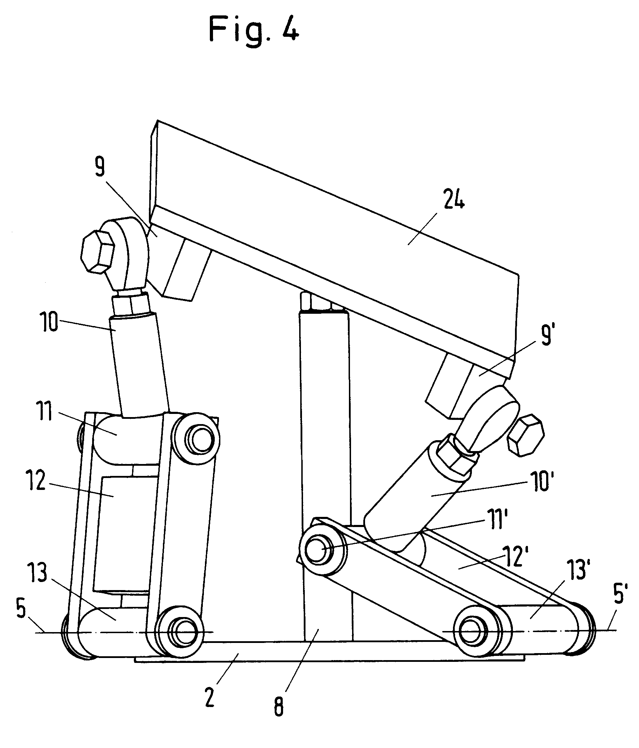

Aus der Figur 2, die eine Vorderansicht von Figur 1 zeigt, ist zu entnehmen, daß die Schale 3 in Förderrichtung F gesehen zu ihren Seiten hin leicht von der Grundplatte 2 weggewölbt ist. Die Schale 3 ist in Transportstellung I dargestellt, d.h. die Schale 3 ist parallel zur Grundplatte 2 und horizontal ausgerichtet. In der Transportstellung I befinden sich die Kniehebel 7, 7' in zueinander leicht eingeknickter Stellung und somit außerhalb ihrer Strecklage. Außerdem sind an der Unterseite der Schale im Bereich der Anlenkpunkte der Kniehebel 7, 7' Rollen 16 angeordnet, die um horizontale Achsen drehbar sind und in Förderrichtung F abrollen können. Diese Rollen 16 dienen dazu, die Schale 3 aus der Kippstellung II (s. Fig. 4) heraus zurück in die Transportstellung I zu drücken. In der Kippstellung II ist die Schale 3 nach rechts oder links schräg zur Förderrichtung F aus der Transportstellung I heraus nach unten gekippt. Für das Wiederaufrichten der Schale sind z.B. nicht dargestellte und parallel zur Förderrichtung F verlaufende Auflaufschienen notwendig, die hinter der Entleerstation 17, 18 (s. Fig. 3) auf dem Niveau der Rolle 16 bei einer Schale 3 in Kippstellung II beginnen und im weiteren Verlauf der Fördervorrichtung auf das Niveau der Rolle 16 in Transportstellung I ansteigen. Nach Erreichen dieses Niveaus endet die Auflaufschiene.

Die Figur 3 zeigt eine Draufsicht auf Figur 1 und zusätzlich einen an die Sortierfördereinrichtung angrenzenden Auffangbereich 17 für das abgeworfene Stückgut, welches nach dem Entleervorgang über einen an den Auffangbereich 17 anschließenden Entleerförderer 18 weitertransportiert wird. Des weiteren ist aus der Draufsicht zu entnehmen, daß die Kippachsen K, K' der Schale 3 bzw. der Zwischenplatte 24 schräg zur Förderrichtung F hin geneigt sind. Die strichliniert eingezeichnete Kippachse K verläuft durch die Gelenke 6 und 9 und die Kippachse K' durch die Gelenke 6 und 9'. Der jeweils von den Kippachsen K, K' und der Fördereinrichtung F eingeschlossene Winkel a liegt im Bereich zwischen 15 bis 45^{o}, insbesondere beträgt er 30^{o}.

In der Figur 4 ist ein vergrößerter Ausschnitt von Figur 2 aus dem Bereich der kippbaren Zwischenplatte 24 dargestellt. Die Schale 3 ist nicht dargestellt, und die Zwischenplatte 24 ist in der Kippstellung II gezeichnet, d. h. die Zwischenplatte 24 ist aus der Transportstellung I heraus nach unten um die Kippachse K oder die Kippachse K' verschwenkt. In der Kippstellung II wird der eingeknickte Kniehebel 7, 7' im Bereich seines Rahmens 12, 12' von einem nicht dargestellten und auf der Grundplatte 2 angeordneten Anschlag mit einer Dämpfungsauflage abgestützt. In dieser Figur wurde aus Gründen der Übersichtlichkeit auf die Darstellung des Dämpferelements 14, des Federelements 15 und der noch im folgenden beschriebenen Sperrklinke 19 verzichtet.

Aus der Figur 5, die eine Draufsicht auf Fig. 4 jedoch in der Transportstellung I zeigt, ist ersichtlich, daß die beiden Kniehebel 7, 7' jeweils über eine Sperrklinke 19, 19' in der leicht eingeknickten Stellung arretiert sind. Die Sperrklinken 19, 19' sind jeweils um eine senkrecht auf der Grundplatte 2 angeordnete Achse 21, 21' schwenkbar und in Richtung des Rahmen 12, 12' des Kniehebels 7, 7' durch eine Feder 22, 22' beaufschlagt. Die Achsen 21, 21' sind auf der der Grundplatte zugewandten Seite der Scharniergelenke 13, 13' angeordnet und in Fahrtrichtung F leicht nach hinten zu dem Scharniergelenk 13, 13' versetzt angeordnet, so daß die Sperrklinken 19, 19' im arretierten Zustand in einem Winkel von etwas mehr als 90^{o} zu den Schwenkachsen S, S' der Scharniergelenke 13, 13' angeordnet sind. Die Sperrklinken 19, 19' weisen eine Aussparung 23, 23' auf, mit der der Rahmen 12, 12' des Kniehebels 7, 7' verriegelt wird. Die Kontur der Aussparung 23, 23' ist an die Kontur der Längsseite des leicht nach innen gekippten Rahmens 12, 12' angepaßt, um diesen sicher abzustützen. Über diese Aussparungen 23, 23' hinaus weisen die Sperrklinke 19, 19' jeweils einen nach außen gerichteten und über die Kontur der Grundplatte 2 hinausragenden Stellhebel 20, 20' auf, der von nicht dargestellten im Bereich der Entleerstation angeordneten Betätigungselementen entriegelt werden kann. Ein Auslösen der Sperrklinke 19 für den Kniehebel 7 bewirkt durch die aufgrund des Federelementes 15 bestehende Vorspannung zwischen der Grundplatte 2 und der Schale 3, daß der Kniehebel 7 weiter nach innen einknickt, somit die Schale 3 an dem Anlenkpunkt des Armes 10' an dem Kugelgelenk 9' absinkt und anschließend die in Figur 4 dargestellte Position einnimmt. Die durch dieses Absinken hervorgerufene Kippbewegung der Schale erfolgt um eine durch den Anlenkpunkt A in der Mitte des Kugelgelenkes 6 und den Anlenkpunkt B in der Mitte des Kugelgelenkes 9 verlaufende Kippachse K. Eine Abbremsung bzw. Dosierung dieser Kippbewegung übernimmt das Dämpferelement 14 (s. Fig. 1).

Des weiteren ist aus der Figur 5 ersichtlich, daß die Anlenkpunkte A, B, C der Kugelgelenke 6, 9, 9' an der Zwischenplatte 24 in den Eckpunkten eines gedachten Dreiecks, insbesondere in den Ecken eines gleichseitigen Dreiecks liegen. Das Dreieck ist symmetrisch zur Mittellinie M der Grundplatte 2 ausgerichtet, wobei der Anlenkpunkt A des Kugelgelenks 8 auf der Mittellinie M liegt. Die jeweils durch die Anlenkpunkte A und B sowie A und C verlaufenden Kippachsen K, K' sind in ihrer vertikalen Projektion in die Ebene der Schwenkachsen S,S' gesehen zu den jeweils gegenüberliegenden Schwenkachsen S, S' der Scharniergelenke 13, 13' der Kniehebel 7, 7' parallel ausgerichtet, wobei der Anlenkpunkt A des Kugelgelenkes 6 auf der Mittellinie M liegt. Ebenfalls in der vertikalen Projektion gesehen fallen die Anlenkpunkte B, C mit den auf der gleichen Seite angeordneten Schwenkachsen S, S' der Gelenke 13, 13' zusammen.

Die Kugelgelenke 6, 9 und 9' sind als handelsübliche Kugelschalengelenke ausgeführt. Diese bestehen aus einem Gewindebolzen, der in Verlängerung des Armes 10, 10' des Kniehebels 7, 7' mit diesem verschraubt ist. An dem dem Arm 10; 10' abgewandten Ende ist der Gewindebolzen mit einer Ringöse versehen, in deren Öffnung eine Kugelschale angeordnet ist. In der Kugelschale ist eine Kugel gleitend gelagert, die zwei abgeflachte Pole aufweist, die über eine Durchgangsbohrung miteinander verbunden sind. In der Bohrung ist ein weiterer Gewindebolzen gelagert, der über eine weitere Bohrung in einer unterhalb der Zwischenplatte 24 angeordneten Befestigungsplatte, die senkrecht zur Zwischenplatte 24 angeordnet ist, mit der Zwischenplatte 24 verbunden ist.

## Patentansprüche

1. Kippbare Schale einer Sortierförderanlage zur Abgabe von Stückgut aus einer horizontalen Transportstellung durch eine Schwenkbewegung in eine Kippstellung mit einer Fördervorrichtung, auf der über ein sich in der Transportstellung in Vertikalrichtung erstreckendes Tragglied mit einem Gelenk für die Schwenkbewegung die Schale angeordnet ist, und mit zwei zwischen der Schale und der Fördervorrichtung und in Förderrichtung gesehen beidseitig neben dem Tragglied angeordneten Kniehebeln, die über jeweils ein Gelenk mit der Fördervorrichtung und der Schale verbunden sind,
dadurch gekennzeichnet,
daß das Gelenk an dem Tragglied (8) als Kugelgelenk (6) ausgebildet ist, die Gelenke an den Kniehebeln (7, 7') an einem Ende als Kugelgelenke (9, 9') und an dem anderen Ende als Scharniergelenke (13, 13') mit Schwenkachsen (S, S') ausgebildet sind, die parallel zu der jeweils gegenüberliegenden Kippachse (K, K') ausgerichtet sind, die durch die Anlenkpunkte (A, B, C) des Kugelgelenkes (6) des Traggliedes (8) und des einen Kniehebels (7) bzw. des Traggliedes (8) und des anderen Kniehebels (7') verläuft, und die Anlenkpunkte (A, B, C) der Kugelgelenke (6, 9, 9') sowie die an den gegenüberliegenden Enden der Kniehebel (7, 7') und des Traggliedes (8) liegenden Mittelpunkte der Scharniergelenke (13, 13') und der Befestigungspunkt des Traggliedes (8) jeweils in den Ecken eines gedachten Dreiecks angeordnet sind.

2. Kippbare Schale nach Anspruch 1,
dadurch gekennzeichnet,
daß die Kugelgelenke (6, 9, 9') an der Schale (3) angeordnet sind.

3. Kippbare Schale nach Anspruch 1,
dadurch gekennzeichnet,
daß die Kugelgelenke (6, 9, 9') an der Fördervorrichtung (1) angeordnet sind.

4. Kippbare Schale nach einem oder mehreren der Ansprüche 1 - 3,
dadurch gekennzeichnet,
daß das Tragglied (8) in Förderrichtung (F) gesehen hinter den Kniehebeln (7, 7') angeordnet ist.

5. Kippbare Schale nach einem oder mehreren der Ansprüche 1 - 3,
dadurch gekennzeichnet, daß das Tragglied (8) in Förderrichtung (F) gesehen vor den Kniehebeln (7, 7') angeordnet ist.

6. Kippbare Schale nach einem oder mehreren der Ansprüche 1 - 5,
dadurch gekennzeichnet,
daß die Scharniergelenke (13, 13') und das Tragglied (8) über eine Grundplatte (2) mit der Fördervorrichtung (1) verbunden sind und die Grundplatte (2) parallel zu der Schale (3) in ihrer horizontalen Transportstellung (I) angeordnet ist.

7. Kippbare Schale nach einem oder mehreren der Ansprüche 1 - 6,
dadurch gekennzeichnet,
daß die Schwenkachsen (S, S') symmetrisch zu der parallel zur Förderrichtung (F) verlaufenden Mittellinie (M) der Fördervorrichtung (1), der Befestigungspunkt des Traggliedes (8) im Verlauf der Mittellinie (M) sowie die Anlenkpunkte (B, C) symmetrisch zur und der Anlenkpunkt (A) im Verlauf der vertikalen Projektion der Mittellinie (M) auf die Schale (3) in Transportstellung (I) angeordnet sind.

8. Kippbare Schale nach einem oder mehreren der Ansprüche 1 - 7,
dadurch gekennzeichnet,
daß die Kniehebel (7, 7') jeweils aus einem Rahmen (12, 12') und einem Arm (10, 10') bestehen, die über ein Scharniergelenk (11, 11') miteinander verbunden sind, die Rahmen (12, 12') an dem der mittleren Scharniergelenke (11, 11') abgewandten Ende mit den Scharniergelenken (13, 13') an der Fördervorrichtung (1) verbunden sind und die Arme (10, 10') mit den Kugelgelenken (9, 9') verbunden sind.

9. Kippbare Schale nach einem oder mehreren der Ansprüche 1 - 8,
dadurch gekennzeichnet,
daß die Kniehebel (7, 7') bei in in Transportstellung (I) angeordneter Schale (3) außerhalb ihrer Strecklage leicht nach innen eingeknickt angeordnet sind.

10. Kippbare Schale nach einem oder mehreren der Ansprüche 6 - 9,
dadurch gekennzeichnet,
daß in Förderrichtung (F) gesehen vor dem Tragglied (8) und auf der Mittellinie (M) hintereinander ein Dämpferelement (14) und ein Federelement (15) angeordnet sind, die jeweils gelenkig mit der Unterseite der Schale (3) und der Grundplatte (2) verbunden sind.

11. Kippbare Schale nach Anspruch 10,
dadurch gekennzeichnet,
daß auf der Grundplatte (2) eine um eine senkrecht zu dieser angeordnete Achse (21, 21') schwenkbare Sperrklinke (19, 19') angeordnet ist, die einen nach außen weisenden und über die Grundplatte (2) hinausragenden Stellhebel (20, 20') und eine zum Rahmen (12, 12') gerichtete Aussparung (23, 23') aufweist und die Sperrklinke (19, 19') in Richtung des Rahmens (12, 12') durch eine Feder (22, 22') beaufschlagt ist, in der Art, daß die an dem Rahmen (12, 12') anliegende Aussparung (23, 23') der im wesentlichen mit seiner Längsrichtung in einem rechten Winkel zur Schwenkachse (S, S') angeordnete Sperrklinke (19, 19') den unter Vorspannung durch das Federelement (15) stehenden Rahmen (12, 12') arretiert.

12. Kippbare Schale nach einem oder mehreren der Ansprüche 1 bis 11,
dadurch gekennzeichnet,
daß die von dem Tragglied (8) ausgehenden Schenkel der gedachten Dreiecke gleich lang sind.

13. Kippbare Schale nach einem oder mehreren der Ansprüche 1 bis 11,
dadurch gekennzeichnet,
daß die gedachten Dreiecke gleichseitig sind.

14. Kippbare Schale nach einem oder mehreren der Ansprüche 1 bis 13,
dadurch gekennzeichnet,
daß die Seitenlänge der beiden gedachten Dreiecke gleich sind.

## Claims

1. A tiltable dish of a sorting conveyor installation for the delivery of piece goods from a horizontal transport position through a swivelling movement into a tilting position with a conveyor device on which the dish is arranged via a supporting member, extending in the transport position in vertical direction, with a joint for the swivelling movement, and with two bent levers arranged between the dish and the conveyor device and, viewed in the conveying direction, on both sides adjacent to the supporting member, which bent levers are connected in each case via a joint with the conveyor device and with the dish, characterised in that
the joint is constructed on the supporting member (8) as a ball-and-socket joint (6), the joints on the bent levers (7, 7') are constructed at one end as ball-and-socket joints (9, 9') and at the other end as hinge joints (13, 13') with swivel axes (S, S') which are aligned parallel to the respectively opposite tilting axis (K, K'), which runs through the articulation points (A, B, C) of the ball-and-socket joint (6) of the supporting member (8) and of the one bent lever (7) or of the supporting member (8) and of the other bent lever (7'), and the articulation points (A, B, C) of the ball-and-socket joint (6, 9, 9') and also the central points of the hinge joints (13, 13') lying at the opposite ends of the bent levers (7, 7') and of the supporting member (8) and the attachment point of the supporting member (8) are arranged in each case in the comers of an imaginary triangle.

2. A tiltable dish according to Claim 1,
characterised in that
the ball-and-socket joints (6, 9, 9') are arranged on the dish (3).

3. A tiltable dish according to Claim 1,
characterised in that
the ball-and-socket joints (6,9, 9') are arranged on the conveyor device (1).

4. A tiltable dish according to one or more of Claims 1-3,
characterised in that
the supporting member (8), viewed in conveying direction (F), is arranged behind the bent levers (7, 7').

5. A tiltable dish according to one or more of Claims 1-3,
characterised in that
the supporting member (8), viewed in conveying direction (F), is arranged in front of the bent levers (7, 7').

6. A tiltable dish according to one or more of Claims 1-5,
characterised in that
the hinge joints (13, 13') and the supporting member (8) are connected via a base plate (2) with the conveyor device (1) and the base plate (2) is arranged parallel to the dish (3) in its horizontal transport position (I).

7. A tiltable dish according to one or more of Claims 1-6,
characterised in that
the swivel axes (S, S') are arranged symmetrically to the central line (M) of the conveyor device (1) running parallel to the conveying direction (F), the attachment point of the supporting member (8) is arranged in the path of the central line (M) and the articulation points (B, C) are arranged symmetrically to, and the articulation point (A) in the path of the vertical projection of the central line (M) onto the dish (3) in transport position (I).

8. A tiltable dish according to one or more of Claims 1-7,
characterised in that
the bent levers (7, 7') consist in each case of a frame (12, 12') and an arm (10, 10'), which are connected with each other via a hinge joint (11, 11'), the frames (12, 12') at the end facing away from the central hinge joints (11, 11') are connected with the hinge joints (13, 13') on the conveyor device (1) and the arms (10, 10') are connected with the ball-and-socket joints (9, 9').

9. A tiltable dish according to one of more of Claims 1-8,
characterised in that
with the dish (3) arranged in transport position (I) the bent levers (7, 7') are arranged bent slightly inwards outside their extension position.

10. A tiltable dish according to one or more of Claims 6-9,
characterised in that
a damper element (14) and a spring element (15) are arranged one behind the other, viewed in conveying direction (F), in front of the supporting member (8) and on the central line (M), which elements (14) and (15) are in each case connected articulatedly with the underside of the dish (3) and the base plate (2).

11. A tiltable dish according to Claim 10,
characterised in that
on the base plate (22) a catch (19, 19') is arranged which is swivellable about an axis (21, 21') arranged vertically to the base plate (22), which catch (19, 19') has an adjusting lever (20, 20') pointing outwards and projecting beyond the base plate (2) and also has a recess (23, 23') directed towards the frame (12, 12') and the catch (19, 19') is acted upon by a spring (22, 22') in the direction of the frame (12, 12') such that the recess (23, 23'), lying adjacent to the frame (12, 12'), of the catch (19, 19') arranged substantially with its longitudinal direction at right angles to the swivel axis (S, S') arrests the frame (12, 12') which is under prestressing by the spring element (15).

12. A tiltable dish according to one or more of Claims 1 to 11,
characterised in that
the shanks of the imaginary triangles, proceeding from the supporting member (8), are identical in length.

13. A tiltable dish according to one or more of Claims 1 to 11,
characterised in that
the imaginary triangles are equilateral.

14. A tiltable dish according to one or more of Claims 1 to 13,
characterised in that
the side lengths of the two imaginary triangles are identical.

## Revendications

1. Plateau basculant d'une installation d'avance et de tri, pour distribuer des marchandises de détail d'une position de transport horizontale par un mouvement de pivotement dans une position basculante, comportant un dispositif d'avance, sur lequel est agencé le plateau, au-dessus d'un organe porteur s'étendant en position de transport dans la direction verticale et comportant une articulation pour le mouvement de pivotement, et deux leviers à genouillère agencés entre le plateau et le dispositif d'avance et, dans le sens d'avance, des deux côtés à proximité de l'organe porteur, leviers à genouillère qui sont reliés par l'intermédiaire à chaque fois d'une articulation au dispositif d'avance et au plateau,
caractérisé en ce que l'articulation est réalisée sur
l'organe porteur (8) sous forme d'une articulation sphérique (6), les articulations sont réalisées sur les leviers à genouillère (7,7'), à une extrémité sous forme d'articulations sphériques (9,9'), et à l'autre extrémité sous forme d'articulations à charnière (13,13'), avec des axes de pivotement (S,S') qui sont orientés parallèlement à l'axe de basculement (K,K') à chaque fois opposé, qui s'étend à travers les points d'articulation (A,B,C) de l'articulation sphérique (6) de l'organe porteur (8) et de l'un des leviers à genouillère (7) ou de l'organe porteur (8) et de l'autre levier à genouillère (7'), et les points d'articulation (A,B,C) des articulations sphériques (6,9,9'), ainsi que les points centraux des articulations à charnière (13,13'), situés aux extrémités opposées des leviers à genouillère (7,7') et de l'organe porteur (8), et le point de fixation de l'organe porteur (8) sont agencés à chaque fois dans les coins d'un triangle imaginaire.

2. Plateau basculant selon la revendication 1,
caractérisé en ce que les articulations sphériques (6,9,9') sont agencées sur le plateau (3).

3. Plateau basculant selon la revendications 1,
caractérisé en ce que les articulations sphériques (6,9,9') sont agencées sur le dispositif d'avance (1).

4. Plateau basculant selon l'une ou plusieurs des revendications 1 à 3,
caractérisé en ce que l'organe porteur (8) est agencé, dans le sens d'avance (F), en aval des leviers à genouillère (7,7').

5. Plateau basculant selon l'une ou plusieurs des revendications 1 à 3,
caractérisé en ce que l'organe porteur (8) est agencé, dans le sens d'avance (F), en amont des leviers à genouillère (7,7').

6. Plateau basculant selon l'une ou plusieurs des revendications 1 à 5,
caractérisé en ce que les articulations à charnière (13,13') et l'organe porteur (8) sont reliés, par l'intermédiaire d'une plaque de base (2), au dispositif d'avance (1), et la plaque de base (2) est agencée, parallèlement au plateau (3), dans sa position de transport horizontale (I).

7. Plateau basculant selon l'une ou plusieurs des revendications 1 à 6,
caractérisé en ce que les axes de pivotement (S,S') sont symétriques à la ligne centrale (M) du dispositif d'avance (1), s'étendant parallèlement à la direction d'avance (F), le point de fixation de l'organe porteur (8) est prévu dans le tracé de la ligne centrale (M), les points d'articulation (B,C) sont prévus symétriquement à la ligne centrale (M), et le point d'articulation (A) est prévu dans le tracé de la projection verticale de la ligne centrale (M) sur le plateau (3), en position de transport (I).

8. Plateau basculant selon l'une ou plusieurs des revendications 1 à 7,
caractérisé en ce que les leviers à genouillère (7,7') sont à chaque fois constitués d'un cadre (12,12') et d'un bras (10,10') qui sont reliés ensemble par l'intermédiaire d'une articulation à charnière (11,11'), les cadres (12,12') à l'extrémité opposée des articulations à charnière centrales (11,11') sont reliés aux articulations à charnière (13,13') sur le dispositif d'avance (1), et les bras (10,10') sont reliés aux articulations sphériques (9,9').

9. Plateau basculant selon l'une ou plusieurs des revendications 1 à 8,
caractérisé en ce que les leviers à genouillère (7,7') sont agencés, pour un plateau (3) agencé en position de transport (I), à l'extérieur de leur état d'extension, en étant légèrement coudés vers l'intérieur.

10. Plateau basculant selon l'une ou plusieurs des revendications 6 à 9,
caractérisé en ce que, dans le sens de transport (F), en amont de l'organe porteur (8) et sur la ligne centrale (M), sont agencés l'un derrière l'autre, un élément d'amortissent (14) et un élément élastique (15), qui sont à chaque fois reliés de façon articulée à la face inférieure du plateau (3) et à la plaque de base (2).

11. Plateau basculant selon la revendication 10,
caractérisé en ce que sur la plaque de base (2), est agencé un cliquet d'arrêt (19,19'), pouvant pivoter autour d'un axe (21,21') qui est agencé orthogonalement à la plaque de base et comportant un levier de réglage (20,20') qui s'étend vers l'extérieur et fait saillie au-delà de la plaque de base (2), et un évidement (23,23') orienté vers le cadre (12, 12'), et le cliquet d'arrêt (19,19') est soumis en direction du cadre (12,12') à un ressort (22,22') de sorte que l'évidement (23,23') reposant sur le cadre (12,12'), du cliquet d'arrêt (19,19') agencé essentiellement avec sa direction longitudinale à angle droit par rapport à l'axe de pivotement (S,S'), arrête le cadre (12,12') précontraint par l'élément élastique (15).

12. Plateau basculant selon l'une ou plusieurs des revendications 1 à 11,
caractérisé en ce que les côtés des triangles imaginaires, partant de l'organe porteur (8), sont de même longueur.

13. Plateau basculant selon l'une ou plusieurs des revendications 1 à 11,
caractérisé en ce que les triangles imaginaires sont équilatéraux.

14. Plateau basculant selon l'une ou plusieurs des revendications 1 à 13,
caractérisé en ce que les longueurs des côtés des deux triangles imaginaires sont égales.
